# EUROPEAN PATENT APPLICATION

(11) **EP 4 815 283 A1**
(43) Date of publication of application: **30.09.2026**
(21) Application number: 24893524.9
(22) Date of filing: 21.11.2024
(51) Int. Cl.: H02M 1/32, H02M 7/5387

(54) **ZVS PROTECTION METHOD, APPARATUS AND DEVICE FOR INVERTER, AND STORAGE MEDIUM**

(30) Priority: 21.11.2023 CN 202311578722
(71) Applicant: Sungrow Power Supply Co., Ltd., Hefei, Anhui 230088 (CN)
(72) Inventor: WANG, Zichen, Hefei, Anhui 230088 (CN); LI, Jiawang, Hefei, Anhui 230088 (CN); CHEN, Qiaodi, Hefei, Anhui 230088 (CN); WANG, Hao, Hefei, Anhui 230088 (CN); LUO, Ran, Hefei, Anhui 230088 (CN)
(74) Representative: Zacco Norway AS
(86) International application number: PCT/CN2024/133492
(87) International publication number: WO 2025/108369

(57) **Abstract**

A ZVS (Zero Voltage Switching) protection method, apparatus and device for an inverter, and a storage medium. The inverter comprises a transformer and a secondary-side bridge arm circuit, which comprises a first bridge arm and a second bridge arm that are connected in series, wherein a secondary-side winding of the transformer is connected to the midpoint of the first bridge arm and the second bridge arm. The ZVS protection method for an inverter comprises: in response to a switching control signal, collecting the present secondary-side current of an inverter; if the secondary-side current does not meet a ZVS condition for a target working condition corresponding to the switching control signal, executing a wave-blocking operation on a secondary side of the inverter; and if the secondary-side current meets the ZVS condition for the target working condition corresponding to the switching control signal, controlling a secondary-side bridge arm circuit to perform bridge-arm switching. Whether a secondary side realizes ZVS is monitored in real time, and bridge-arm switching is performed only when it is ensured that a secondary-side current can realize ZVS; otherwise, a wave-blocking operation is executed on the secondary side of an inverter, thereby realizing the switching cycle-level protection of the secondary side while not increasing a control frequency.

## Description

This application claims the priority to Chinese Patent Application No. 202311578722.0, titled "ZVS PROTECTION METHOD, APPARATUS AND DEVICE FOR INVERTER, AND STORAGE MEDIUM", filed on November 21, 2023 with the China National Intellectual Property Administration, which is incorporated herein by reference in its entirety.

### FIELD

The present disclosure relates to the technical field of inverters, and in particular to a ZVS protection method, a ZVS protection apparatus and a ZVS protection device for an inverter, and a storage medium.

### BACKGROUND

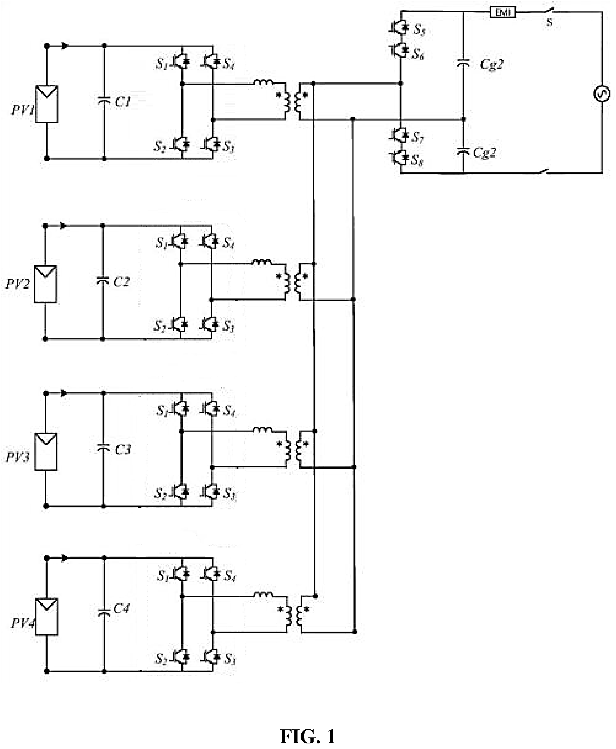

Currently, a topology of a one-to-N micro inverter as shown in FIG. 1 includes at least one primary winding. Each primary winding is configured to connect to a corresponding photovoltaic panel and is connected to a corresponding primary H-bridge circuit. A bidirectional switching circuit is adopted on a secondary side. A high-frequency transformer is provided for achieving voltage step-up and isolation between the primary side and the secondary side. A single-stage grid connection function can be implemented through controlling an outer phase-shift angle between the primary side and the secondary side and an inter phase-shift angle between primary bridge arms.

Typically, the bidirectional switching circuit on the secondary side of the micro inverter adopts a high-voltage silicon MOSFET of which a parasitic body diode has poor reverse recovery characteristics. As a result, a current through the parasitic body diode gradually decays to zero each time the parasitic body diode is turned off. In addition, the parasitic body diode generates a reverse recovery current due to charges stored in a space charge region and a semiconductor region, and the reverse recovery current gradually decays to zero. As a switching frequency of the parasitic body diode increases, the reverse recovery current results in significant voltage stress and power loss. To address the issue of poor reverse recovery characteristics of the parasitic body diode, zero voltage switching (ZVS) technology, also known as soft switching technology, may be employed. A turn-on time of switching transistors in one bridge arm and a turn-on time of switching transistors in the other bridge arm have a phase difference, that is, a phase-shift angle. An output voltage is regulated by regulating the phase-shift angle, to achieve zero voltage switching, staggering the occurrences of high current and high voltage across the switching transistors, thereby reducing switching losses and interference.

In practical control, limited by performance of a controller, a control frequency of the phase-shift angle is much lower than a switching frequency. Under some transient operating conditions, within one control cycle, a voltage at the secondary side or the primary side may undergo significant changes. However, as the control frequency of the phase-shift angle is insufficient, a phase difference of turn-on times of the switching transistors fails to be regulated in time. For example, as shown in FIG. 1, it is assumed that a lower bridge arm being on is switched to an upper bridge arm being on. A large reverse recovery current is generated after a switching transistor S7 is turned off. If the switching timing of a switching transistor S5 is not regulated in time, the phase-shift angle is not updated, leading to a failure of responding to a voltage change. As a result, the switching transistors experience both high current and high voltage simultaneously, thereby failing to achieve ZVS protection on the secondary side.

### SUMMARY

A ZVS protection method, a ZVS protection apparatus and a ZVS protection device for an inverter, and a storage medium are provided in the present disclosure, to monitor in real time whether a secondary side is able to achieve ZVS, perform bridge arm switching in response to a secondary current being able to achieve the ZVS, and perform a wave blocking operation in response to the secondary current failing to achieve the ZVS, thereby achieving protection on the secondary side at a switching cycle level without increasing a control frequency.

In a first aspect, a ZVS protection method for an inverter, applied to the inverter, is provided in the present disclosure. The inverter includes a transformer and a secondary bridge arm circuit. The secondary bridge arm circuit includes a first bridge arm and a second bridge arm connected in series. A secondary winding of the transformer is connected to a midpoint between the first bridge arm and the second bridge arm. The ZVS protection method for an inverter includes: in response to a switch switching signal for a secondary side of the inverter, acquiring a present secondary current of the inverter, where the secondary current flows from the transformer into the midpoint between the first bridge arm and the second bridge arm; performing a wave blocking operation on the secondary side of the inverter in response to the secondary current failing to meet a ZVS condition under a target operating condition corresponding to the switch switching signal; and performing bridge arm switching on the secondary bridge arm circuit based on the target operating condition in response to the secondary current meeting the ZVS condition under the target operating condition corresponding to the switch switching signal.

In a second aspect, a ZVS protection apparatus for an inverter, applied to the inverter, is provided in the present disclosure. The inverter includes a transformer and a secondary bridge arm circuit. The secondary bridge arm circuit includes a first bridge arm and a second bridge arm connected in series. A secondary winding of the transformer is connected to a midpoint between the first bridge arm and the second bridge arm. The ZVS protection apparatus for an inverter includes: an acquisition module, configured to acquire a present secondary current of the inverter in response to a switch switching signal for a secondary side of the inverter, where the secondary current flows from the transformer into the midpoint between the first bridge arm and the second bridge arm; a wave blocking module, configured to perform a wave blocking operation on the secondary side of the inverter in response to the secondary current failing to meet a ZVS condition under a target operating condition corresponding to the switch switching signal; and a switching module, configured to perform bridge arm switching on the secondary bridge arm circuit in response to the secondary current meeting the ZVS condition under the target operating condition corresponding to the switch switching signal.

In a third aspect, a ZVS protection device for an inverter is provided in the present disclosure. The ZVS protection device for an inverter includes a memory storing an instructions and at least one processor. The at least one processor invokes the instructions in the memory to cause the ZVS protection device for an inverter to perform the ZVS protection method for an inverter described above.

In a fourth aspect, a computer-readable storage medium, storing instructions, is provided in the present disclosure. The instructions, when executed on a computer, cause the computer to perform the ZVS protection method for an inverter described above.

In the technical solution provided in the present disclosure, the present secondary current of the inverter is acquired in response to the switch switching signal. In response to the secondary current failing to meet the ZVS condition under the target operating condition corresponding to the switch switching signal, the wave blocking operation is performed on the secondary side of the inverter. In response to the secondary current meeting the ZVS condition under the target operating condition corresponding to the switch switching signal, bridge arm switching is performed on the secondary bridge arm circuit. The secondary bridge arm circuit includes the first bridge arm and the second bridge arm. In the embodiment, whether the secondary side meets the ZVS condition is monitored in real time, bridge arm switching is performed in response to the secondary current meeting the ZVS condition, and the wave blocking operation is performed in response to the secondary current failing to meet the ZVS condition. Therefore, protection on the secondary side is achieved at a switching cycle level without increasing the control frequency.

### BRIEF DESCRIPTION OF THE DRAWINGS

FIG. 1 is a schematic diagram of a topology of an inverter according to an embodiment of the present disclosure;
FIG. 2 is a schematic diagram of a current flow direction of a secondary bridge arm circuit according to an embodiment of the present disclosure;
FIG. 3 is a schematic diagram of a sampling circuit according to an embodiment of the present disclosure;
FIG. 4 is a schematic diagram of a ZVS protection method for an inverter according to an embodiment of the present disclosure;
FIG. 5 is a schematic diagram of a ZVS protection method for an inverter according to another embodiment of the present disclosure;
FIG. 6 is a schematic diagram of a driving waveform of an inverter according to an embodiment of the present disclosure;
FIG. 7 is a schematic diagram of a ZVS protection method for an inverter according to another embodiment of the present disclosure;
FIG. 8 is a schematic diagram of a driving waveform of an inverter according to another embodiment of the present disclosure;
FIG. 9 is a schematic diagram of a ZVS protection method for an inverter according to another embodiment of the present disclosure;
FIG. 10 is a schematic diagram of a driving waveform of an inverter according to another embodiment of the present disclosure;
FIG. 11 is a schematic diagram of a ZVS protection apparatus for an inverter according to an embodiment of the present disclosure;
FIG. 12 is a schematic diagram of a ZVS protection apparatus for an inverter according to another embodiment of the present disclosure; and
FIG. 13 is a schematic diagram of a ZVS protection device for an inverter according to an embodiment of the present disclosure.

### DETAILED DESCRIPTION

A ZVS protection method, a ZVS protection apparatus and a ZVS protection device for an inverter, and a storage medium are provided in the present disclosure, to monitor in real time whether a secondary side is able to achieve ZVS, perform bridge arm switching in response to the secondary current being able to achieve the ZVS, and perform a wave blocking operation in response to the secondary current failing to achieve the ZVS, thereby achieving protection on the secondary side at a switching cycle level without increasing a control frequency.

Terms of "first", "second", "third", "fourth" and the like (if any) in the specification, the claims and the drawings of the present disclosure are used to distinguish an object from other similar objects rather than describe a specific order or a sequence. It should be understood that the used data may be interchangeable when appropriate, so that the embodiments described here may be implemented in a sequence other than those illustrated or described here. Moreover, the terms "include," "comprise", and any other variants thereof are intended to cover the non-exclusive inclusion. For example, a process, a method, a system, a product, or a device that includes a list of steps or units is not necessarily limited to those expressly listed steps or units, but may include other steps or units not expressly listed or inherent in such process, method, product, or device.

To facilitate understanding, specific processes of the embodiments of the present disclosure are described below. The ZVS protection method for an inverter according to the present disclosure is applied to the inverter. The inverter includes a sampling circuit, a controller, a primary circuit, a transformer and a secondary bridge arm circuit. The secondary bridge arm circuit includes a first bridge arm and a second bridge arm connected in series. An output end of the primary circuit is connected to a primary winding of the transformer, a secondary winding of the transformer is connected to a midpoint between the first bridge arm and the second bridge arm, an input end of the sampling circuit is connected to the secondary winding, and an output end of the sampling circuit is connected to the controller.

In an embodiment, the primary circuit of the inverter includes N inverter H-bridges, an input end of each of the inverter H-bridges is connected to a corresponding direct-current source. The transformer includes N primary windings and one secondary winding. An output end of each of the inverter H-bridges is connected to a corresponding primary winding. The secondary winding of the transformer is connected to the secondary bridge arm circuit. N is an integer greater than zero.

FIG. 1 shows an example of a micro-inverter topology, where N is 4. An output end of the micro inverter is connected to a load or a power grid. Transformation ratios of N transformers are identical. Each of the inverter H-bridges includes four switching transistors S1, S2, S3 and S4. Input ends of the inverter H-bridges are connected to respective direct-current sources, and input ends of the inverter H-bridges are connected in parallel with respective direct-current capacitors. In FIG. 1, C1, C2, C3 and C4 are the direct-current capacitors connected to the inverter H-bridges. The direct-current sources may be photovoltaic modules PV1 to PV4 shown in FIG. 1.

In an embodiment, the secondary bridge arm circuit includes a bidirectional switching bridge arm and a capacitor bridge arm.

The bidirectional switching bridge arm includes a first bridge arm (also referred to as an upper bridge arm) and a second bridge arm (also referred to as a lower bridge arm) connected in series. A terminal of the secondary winding of each of the transformers is connected to a midpoint of the bidirectional switching bridge arm, and another terminal of the secondary winding of each of the transformers is connected to a midpoint of the capacitor bridge arm.

In an embodiment, the first bridge arm includes a first switching transistor S5 and a second switching transistor S6, and the second bridge arm includes a third switching transistor S7 and a fourth switching transistor S8. From the upper bridge arm to the lower bridge arm, the first switching transistor S5, the second switching transistor S6, the third switching transistor S7 and the fourth switching transistor S8 are sequentially connected in series. The capacitor bridge arm includes two capacitors Cg2 connected in series.

A terminal of the secondary winding is connected to a midpoint between the second switching transistor S6 and the third switching transistor S7, and another terminal of the secondary winding is connected to a midpoint between the two capacitors.

It should be further noted that the topology of the above-mentioned inverter is only an example of the embodiment. The ZVS protection method for an inverter according to the present disclosure is also applied to other scenarios of switching between the first bridge arm and the second bridge arm, including but not limited to other inverter topologies, such as an inverter topology in which N is 6, and other circuit topologies in which bridge arm switching is required, such as a scenario of switching between an upper bridge arm and a lower bridge arm in a DC-DC module circuit.

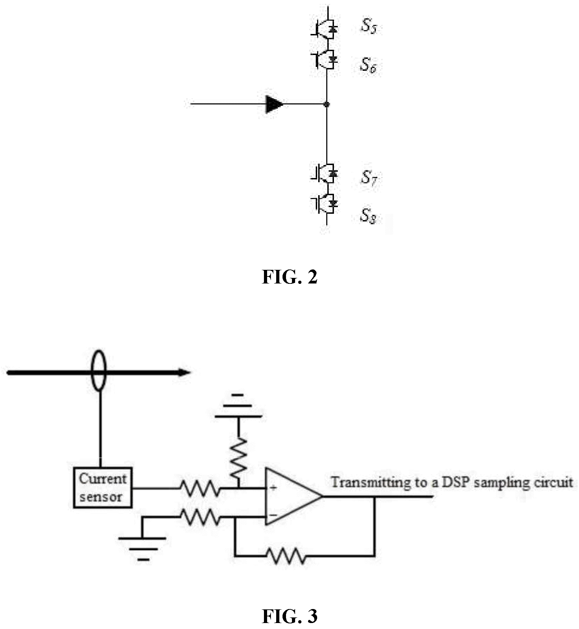

The principle of implementing ZVS on the secondary bridge arm circuit according to the present disclosure is described with reference to FIG. 2 with an example that a secondary voltage is positive, S6 and S8 are always-on switching transistors, and S5 and S7 are high-frequency chopper transistors. It is assumed that the switching transistor S5 is off and the switching transistor S7 is on. The switching transistor S5 is to be turned on and the switching transistor S7 is to be turned off. Achieving the switching requires a secondary current to flow into the midpoint of the bridge arm, that is, the midpoint between S6 and S7, at a switching time instant, and requires the secondary current to be large enough to ensure that charging and discharging of junction capacitors of upper and lower switching transistors is completed within a dead time, thus implementing ZVS on the secondary bridge arm circuit.

In an embodiment of the present disclosure, a sampling circuit is provided for the inverter as shown in FIG. 3. The sampling unit includes a sampling module and a comparator. The sampling module is connected to the secondary winding and is configured to acquire a secondary current flowing from the secondary winding of the transformer into the midpoint between the first bridge arm and the second bridge arm.

The sampling module is connected to the comparator. The comparator is configured to compare the secondary current of the transformer with a preset current and generate a comparison result.

The controller is connected to the comparator. The controller is configured to perform, in response to receiving a switch switching signal, bridge arm switching or wave blocking on the secondary bridge arm circuit based on the comparison result.

In an embodiment, the sampling module is a current sensor, and the comparator includes a digital signal processing (DSP) module. The current sensor sends a sampling current to the DSP module, and then a comparator module (i.e., comparator subsystem (CMPSS)) in the DSP module performs comparison on the sampling current to obtain the comparison result. The comparison module may be arranged outside the DSP module. The comparison module performs comparison to obtain a 0-1 signal, and sends the 0-1 signal to the DSP module. The 0-1 signal represents a level signal. The 1 signal represents a high level signal, and the 0 signal represents a low level signal. The controller may obtain a comparison result by acquiring the level signals from the comparator.

In an embodiment, the current sensor acquires the secondary current flowing from the secondary winding of the transformer into the midpoint of the bridge arm, inputs the secondary current into the comparator for comparison and conversion into a level signal. The controller is connected to the comparator, acquires the comparison result from the comparator, and performs bridge arm switching or the wave blocking operation based on the comparison result.

In an embodiment, the sampling circuit may be the sampling module directly connected to the controller, and sends the secondary current acquired in real time to the controller. The controller performs a comparison method and performs bridge arm switching or the wave blocking operation.

It can be understood that the sampling circuit according to the embodiment is a circuit having sampling and comparison functions. Electronic components included in the sampling circuit and connection relationships in a circuit topology are not limited herein. The sampling circuit may further include components such as a filter and a signal amplifier, or adopt other connection relationship in the circuit topology.

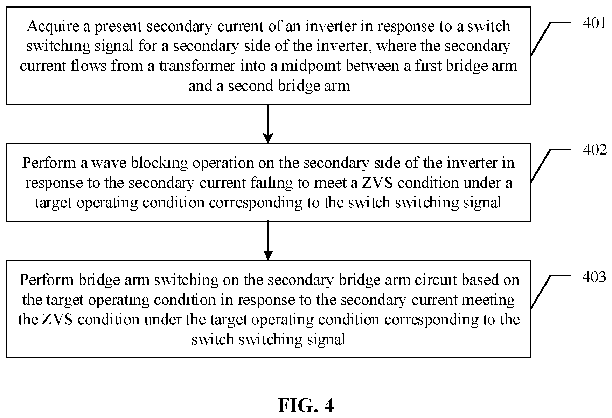

FIG. 4 illustrates an embodiment of a ZVS protection method for an inverter. The ZVS protection method for an inverter is applied to the above-described inverter and includes steps 401 to 403.

In step 401, a present secondary current of the inverter is acquired in response to a switch switching signal for the secondary side of the inverter. The secondary current flows from the transformer into the midpoint between the first bridge arm and the second bridge arm.

It can be understood that an execution subject of the present disclosure may be a ZVS protection apparatus for an inverter, a controller built in the inverter, or an external controller of the inverter, which is not limited herein. In the embodiments of the present disclosure, description is provided with an example that the controller is the execution subject.

In response to receiving the switch switching signal for the secondary side of the inverter, the controller acquires the present secondary current of the inverter in real time through the current sensor.

The switch switching signal refers to a signal for controlling switching between the first bridge arm and the second bridge arm. In each control cycle of the inverter, two switching transistors on one of the first bridge arm and the second bridge arm are turned on, while two switching transistors on the other one of the first bridge arm and the second bridge arm are turned off to perform direct-current and alternating-current conversion. In the embodiment, ZVS protection is achieved at a switching cycle level through real-time acquisition of the secondary current.

In step 402, a wave blocking operation is performed on the secondary side of the inverter in response to the secondary current failing to meet a ZVS condition under a target operating condition corresponding to the switch switching signal.

In the embodiment, the comparator monitors the secondary current in real time, compares the secondary current with a preset current under the target operating condition, and outputs a comparison result to the controller. The controller acquires the comparison result from the comparator. When the comparator indicates that the present secondary current fails to meet the ZVS condition under the target operating condition corresponding to the switch switching signal, the controller performs the wave blocking operation on the secondary side of the inverter.

In the embodiment, a current target operating condition is determined based on the switch switching signal. The target operating condition is to switch from the second bridge arm to the first bridge arm, or to switch from the first bridge arm to the second bridge arm.

The preset current Is is an absolute value of a minimum current required to exactly complete charging and discharging of junction capacitors of upper and lower switching transistors at an end of the dead time. A value of the preset current may be set based on the actual situation of the junction capacitors of upper and lower switching transistors, and a direction of the preset current is related to an operating condition. A current for exactly completing the charging and discharging of the junction capacitors of upper and lower switching transistors of the first bridge arm at the end of the dead time is determined as a first preset current, and the first preset current may be set to be greater than zero. A current for exactly completing the charging and discharging of junction capacitors of upper and lower switching transistors of the second bridge arm at the end of the dead time is determined as a second preset current, and the second preset current may be set to be less than zero.

When the target operating condition is to switch from the second bridge arm to the first bridge arm, the secondary current being greater than the first preset current meets the ZVS condition, and the secondary current being less than the first preset current fails to meet the ZVS condition.

When the target operating condition is to switch from the first bridge arm to the second bridge arm, the secondary current being less than the second preset current meets the ZVS condition, and the secondary current being greater than the second preset current fails to meet the ZVS condition.

To facilitate understanding, an example is provided. It is assumed that the first preset current is 5A and the second preset current is -5A.

The target operating condition corresponding to the switch switching signal is to switch from the second bridge arm to the first bridge arm. The secondary current flowing into the first bridge arm is 6A, which is greater than the first preset current, and therefore soft switching protection can be implemented.

The target operating condition corresponding to the switch switching signal is to switch from the first bridge arm to the second bridge arm. The secondary current flowing into the second bridge arm is -6A, which is less than the second preset current, and therefore soft switching protection can be implemented.

The wave blocking operation according to the embodiment is to block the switching transistors on the secondary side of the inverter in accordance with a preconfigured wave blocking control rule. For example, wave blocking is performed on the switching transistors on the secondary circuit in batch when a current through a current bridge arm is decreased to zero though freewheeling. The wave blocking control rule can be configured based on the actual situation, which is not limited in the present disclosure.

In the embodiment, under a condition that a control frequency is difficult to increase, protection on the switching transistors on the secondary side is achieved at a switching cycle level under a transient operating condition, and the wave blocking operation is directly performed on the secondary side when the ZVS fails to be achieved, to avoid excessive stress of the switching transistors and prevent an increased losses.

It should be further noted that the wave blocking operation is performed on both the primary side and the secondary side of the inverter in response to the secondary current failing to meet the ZVS condition under the target operating condition corresponding to the switch switching signal.

In step 403, bridge arm switching is performed on the secondary bridge arm circuit based on the target operating condition in response to the secondary current meeting the ZVS condition under the target operating condition corresponding to the switch switching signal.

When the comparison result acquired by the controller from the comparator is that the secondary current meets the ZVS condition under the target operating condition corresponding to the switch switching signal, the controller switches the first bridge arm from an on state to an off state and switches the second bridge arm from an off state to an on state based on the target operating condition. Alternatively, the controller switches the second bridge arm from the on state to the off state and switches the first bridge arm from the off state to the on state based on the target operating condition.

In the embodiment, whether the secondary side is able to achieve the ZVS is monitored in real time. Bridge arm switching is performed in response to the secondary current being able to achieve the ZVS condition. The wave blocking operation is performed in response to the secondary current failing to achieve the ZVS. Therefore, the protection on the switching transistors on the secondary side is achieved at a switching cycle level without increasing the control frequency.

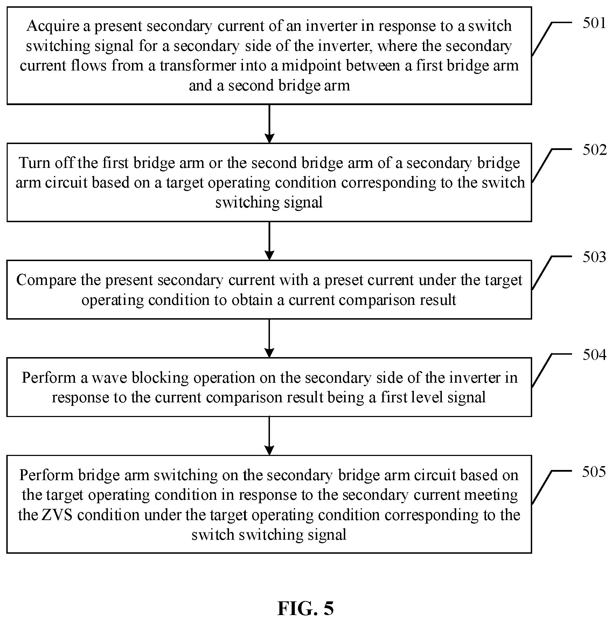

Referring to FIG. 5, the ZVS protection method for an inverter according to another embodiment of the present disclosure includes steps 501 to 505.

In step 501, a present secondary current of the inverter is acquired in response to a switch switching signal for the secondary side of the inverter.

Step 501 may be referred to step 401, which is not repeated herein.

In step 502, the first bridge arm or the second bridge arm of the secondary bridge arm circuit is turned off based on a target operating condition corresponding to the switch switching signal.

When the target operating condition corresponding to the switch switching signal is to switch from the first bridge arm to the second bridge arm, a first switching transistor of the first bridge arm is turned off, and a second switching transistor of the first bridge arm is controlled to be in an on state. When the target operating condition corresponding to the switch switching signal is to switch from the second bridge arm to the first bridge arm, the third switching transistor of the second bridge arm is turned off and the fourth switching transistor is controlled to be in an on state. Simultaneously, the other bridge arm is also in an off state, and therefore the secondary side enters a dead time.

The dead time is to prevent switching transistors of the first bridge arm and the second bridge arm at the secondary side of the inverter from being turned on simultaneously. The dead time is a period of time during bridge arm switching in which both the first bridge arm and the second bridge arm are turned off.

In step 503, the present secondary current is compared with a preset current having a direction identical to a direction of the present secondary current based on the target operating condition, to obtain a current comparison result.

The present secondary current is compared with the preset current based on the target operating condition to obtain the current comparison result, to ensure that a current flowing into a midpoint of a bridge arm at a time instant of bridge arm switching is large enough so that charging and discharging of junction capacitors of upper and lower switching transistors under a corresponding operating condition are completed within the dead time. That is, in response to the secondary current being greater than a first preset current at a time instant of switching from the second bridge arm to the first bridge arm, or in response to the secondary current being less than a second preset current at a time instant of switching from the first bridge arm to the second bridge arm, it is determined that the present secondary current meets the ZVS condition under the target operating condition corresponding to the switch switching signal. In response to the secondary current being less than the first preset current at the time instant of switching from the second bridge arm to the first bridge arm, or in response to the secondary current being greater than the second preset current at the time instant of switching from the first bridge arm to the second bridge arm, it is determined that the present secondary current fails to meet the ZVS condition under the target operating condition corresponding to the switch switching signal.

The comparison result includes a first level signal and a second level signal. The first level signal indicates that the secondary current fails to meet the ZVS condition under the target operating condition corresponding to the switch switching signal. The second level signal indicates that the secondary current meets the ZVS condition under the target operating condition corresponding to the switch switching signal.

In the embodiment, the first level signal and the second level signal are set based on the actual situation. For example, when the secondary current meets the ZVS condition under the target operating condition corresponding to the switch switching signal, the first level signal is set to a high level signal, and the comparator generates a 1 signal. When the secondary current fails to meet the ZVS condition under the target operating condition corresponding to the switch switching signal, the second level signal is set to a low level signal and the comparator generates a 0 signal.

Alternatively, if the secondary current meets the ZVS condition under the target operating condition corresponding to the switch switching signal, the first level signal is set to the low level signal, and the comparator generates the 0 signal. If the secondary current fails to meet the ZVS condition under the target operating condition corresponding to the switch switching signal, the second level signal is set to the high level signal, and the comparator generates the 1 signal.

In step 504, a wave blocking operation is performed on the secondary side of the inverter in response to the current comparison result being the first level signal.

If the controller acquires the first level signal from the comparator, after the dead time, switching transistors of the other bridge arm are kept in the off state, and the wave blocking operation is performed on the secondary side, to prevent the secondary side from generating a reverse recovery current, thus avoiding a large voltage stress and loss.

To facilitate understanding, description is provided as follows. A secondary voltage is positive, the first bridge arm includes the first switching transistor S5 and the second switching transistor S6, and the second bridge arm includes the third switching transistor S7 and the fourth switching transistor S8. S5, S6, S7 and S8 are connected in series in sequence. S6 and S8 are always-on switching transistors, and S5 and S7 are high-frequency chopper switching transistors.

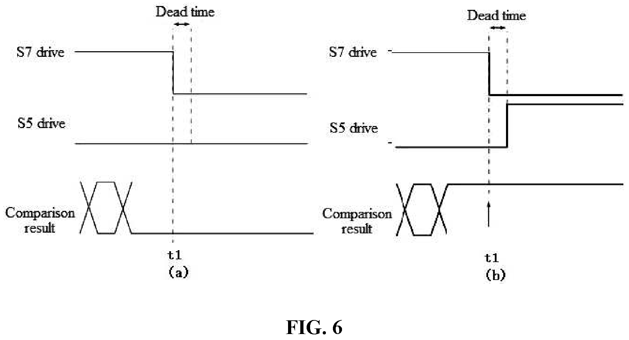

It is assumed that the switch switching signal indicates that S7 is switched from the on state to the off state, and S5 is switched from the off state to the on state, that is, the second bridge arm being on is switched to the first bridge arm being on. At a time instant t1 when S7 is turned off or within a dead time during which S5 is not turned on after the time instant t1 when S7 is turned off, the comparison result is acquired from the comparator. When the comparison result from the comparator indicates that the secondary current fails to meet a soft switching condition, which can refer to FIG. 6 (a) in which a driving waveform is a low-level signal, S5 is controlled to be in the off state and continuously outputs a low-level signal after the dead time, and the wave blocking operation is directly performed on the secondary side.

In step 505, bridge arm switching is performed on the secondary bridge arm circuit based on the target operating condition in response to the secondary current meeting the ZVS condition under the target operating condition corresponding to the switch switching signal.

If the controller determines that the current comparison result is the second level signal, the controller waits until an end of the dead time, and turns on the other bridge arm at the end of the dead time based on the target operating condition.

In an embodiment, when the target operating condition is to switch from the first bridge arm to the second bridge arm, the third switching transistor of the second bridge arm is turned on and the fourth switching transistor is controlled to be in the on state at the end of the dead time. When the target operating condition is to switch from the second bridge arm to the first bridge arm, the first switching transistor of the first bridge arm is turned on and the second switching transistor is controlled to be in the on state at the end of the dead time.

Description is provided with an example that the switch switching signal is to switch S7 from the on state to the off state and to switch S5 from the off state to the on state. FIG. 6(b) illustrates a driving waveform formed when the secondary current meets the ZVS condition under the target operating condition corresponding to the switch switching signal. At the time instant when S7 is turned off or within a dead time during which S5 is not turned on after the time instant when S7 is turned off, the comparison result is acquired from the comparator. When the comparison result from the comparator indicates that the secondary current meets the soft switching condition, which can refer to FIG. 6(b) in which the driving waveform is a high-level signal, S5 is turned on at the end of the dead time, and the driving waveform of S5 changes from a low-level signal to a high-level signal.

It can be understood that for the switch switching signal for switching S5 from the on state to the off state and switching S7 from the off state to the on state, reference may be made to the switch switching signal for switching S7 from the on state to the off state and switching S5 from the off state to the on state, which is not repeated herein.

In the embodiment, protection on the switching transistors on the secondary side is achieved at a switching cycle level under transient conditions without increasing the control frequency. Whether the secondary side is able to achieve the ZVS is monitored in real time. The wave blocking operation is performed in response to receiving the first level signal from the comparator, and bridge arm switching is performed in response to receiving the second level signal, preventing the secondary side from being switched when ZVS of the secondary side fails to be achieved, thereby avoiding excessive stress on the switching transistors, and reducing losses of switching transistors on the secondary side.

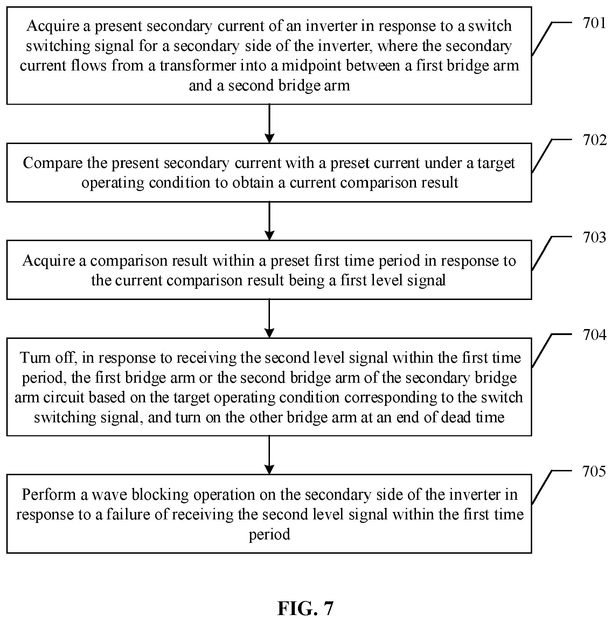

Reference is made to FIG. 7, which shows a ZVS protection method for an inverter according to another embodiment of the present disclosure. The ZVS protection method for an inverter includes steps 701 to 705.

In step 701, a present secondary current of the inverter is acquired in response to a switch switching signal for the secondary side of the inverter.

For step 701, reference may be made to step 401, which is not repeated herein.

In step 702, the present secondary current is compared with a preset current under a target operating condition, to obtain a current comparison result.

For step 702, reference may be made to step 503, which is not repeated herein.

In step 703, a comparison result within a preset first time period is acquired in response to the current comparison result being the first level signal.

The controller acquires the comparison result from the comparator. When the controller receives the first level signal, that is, the comparator indicates that the current fails to meet a soft switching condition, switching is not performed on the first bridge arm and the second bridge arm of the secondary bridge arm circuit, while the secondary side enters a waiting time, and the comparison result within a preset first time period Ts is acquired.

The waiting time is an interval during which the first level signal outputted by the comparator changes to the second level signal, that is, a duration from a current time instant when a switch switching signal is received to a time instant when the sampling circuit acquires the secondary current that meets the ZVS condition.

If the waiting time is greater than the first time period Ts, it is indicated that the secondary current fails to meet the soft switching condition. If the waiting time is less than or equal to the first time period Ts, it is indicated that the secondary current meets the soft switching condition. The first time period is a preset waiting period, which can be set based on the actual situation.

In the embodiment, with the preset waiting period, robustness of the controller can be improved. The secondary side enters the waiting time instead of directly being blocked in response to the present secondary current failing to meet the ZVS condition under the target operating condition corresponding to the switch switching signal, thereby avoiding a reduced operating efficiency of the inverter due to frequent wave blocking.

Further, in the embodiment, the comparison result is acquired first, and then the first bridge arm or the second bridge arm is turned off, rather than acquiring the comparison result after the first bridge arm or the second bridge arm is turned off, thus avoiding unstable switching by the controller caused by the dead time coinciding with the waiting time.

It can be understood that when the current comparison result received by the controller is the second level signal, that is, the comparator indicates that the present secondary current meets the soft switching condition, the controller immediately turns off the switching transistors of the first bridge arm or the switching transistors of the second bridge arm, and turns on the other bridge arm at the end of the dead time without entering the waiting time.

In step 704, the first bridge arm or the second bridge arm of the secondary bridge arm circuit is turned off based on the target operating condition in response to receiving the second level signal within the first time period, and the other bridge arm is turned on at the end of the dead time.

Under the target operating condition of switching from the first bridge arm to the second bridge arm, the controller turns off switching transistors of the first bridge arm in response to receiving the second level signal within the first time period, that is, the waiting time is less than or equal to the preset first time period, and turns on the switching transistors of the second bridge arm at the end of the dead time. Under the target operating condition of switching from the second bridge arm to the first bridge arm, the controller turns off the switching transistors of the second bridge arm in response to receiving the second level signal within the first time period, and turns on the switching transistors of the first bridge arm at the end of the dead time.

In step 705, a wave blocking operation is performed on the secondary side of the inverter in response to a failure of receiving the second level signal within the first time period.

If the controller receives no second level signal within the first time period, that is, the waiting time is greater than the preset first time period, and the comparator continuously outputs the first level signal within the first time period, it is indicated that the soft switching condition is not met and the wave blocking operation is directly performed on the secondary side to block the secondary side.

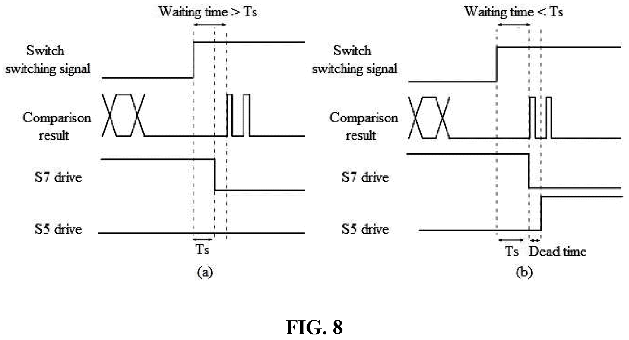

Referring to FIG. 8, it is assumed that the first level signal is a low level signal, that is, the secondary current fails to meet the ZVS condition, and the second level signal is a high level signal, that is, the secondary current meets the ZVS condition, the switch switching signal is to switch S7 from the on state to the off state and to switch S5 from the off state to the on state, that is, to switch the second bridge arm being on to the first bridge arm being on.

In response to receiving the switch switching signal and the current comparison result being the first level signal, that is, the present secondary current fails to meet the ZVS condition under the target operating condition corresponding to the switch switching signal, bridge arm switching is not performed, that is, S7 remains in the on state and outputs a high-level signal, and S5 remains in the off state and outputs a low-level signal.

If the waiting time is greater than the first time period Ts, that is, the comparator continuously outputs the low-level signal within Ts as shown in FIG. 8(a), the secondary current fails to meet the soft switching condition, and S7 is turned off and the wave blocking operation is performed at an end of Ts.

If the waiting time is less than or equal to the first time period Ts, that is, the comparator outputs the high-level signal within Ts, as shown in FIG. 8 (b), S7 is turned off upon reception of the high-level signal, and S5 is turned on at the end of the dead time.

It can be understood that for the switch switching signal for switching S5 from the on state to the off state and switching S7 from the off state to the on state, reference may be made to the switch switching signal for switching S7 from the on state to the off state and switching S5 from the off state to the on state, which is not repeated herein.

In the embodiment, whether the secondary side is able to achieve the ZVS is monitored in real time. The secondary side enters a waiting time in response to the present secondary current failing to meet the ZVS condition, bridge arm switching is performed in response to receiving the second level signal within the preset first time period, and the wave blocking operation is performed on the inverter in response to a failure of receiving the second level signal within the preset first time period. In this way, frequent wave blocking is avoided, which improves the operating efficiency of the inverter and achieving protection on the secondary side at a switching cycle level without increasing the control frequency.

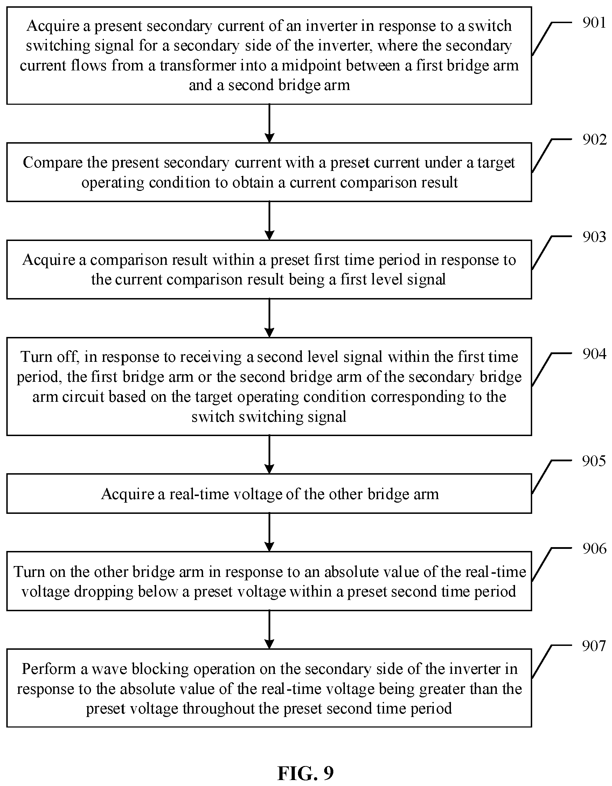

Referring to FIG. 9, which shows a ZVS protection method for an inverter according to another embodiment of the present disclosure. The ZVS protection method for an inverter includes steps 901 to 905.

In step 901, a present secondary current of the inverter is acquired in response to a switch switching signal for the secondary side of the inverter.

In step 902, the present secondary current is compared with a preset current under a target operating condition, to obtain a current comparison result.

In step 903, a comparison result within a preset first time period is acquired in response to the current comparison result being the first level signal.

In step 904, in response to receiving the second level signal within the first time period, the first bridge arm or the second bridge arm of the secondary bridge arm circuit is turned off based on the target operating condition corresponding to the switch switching signal.

For steps 901 to 904, reference may be made to steps 701 to 704, which are not repeated herein.

In step 905, a real-time voltage of the other bridge arm is acquired.

If the target operating condition is to switch from the first bridge arm to the second bridge arm, a real-time voltage of the second bridge arm is acquired when the switching transistors of the first bridge arm are turned off. If the target operating condition is to switch from the second bridge arm to the first bridge arm, a real-time voltage of the first bridge arm is acquired after switching transistors of the second bridge arm are turned off.

In an embodiment, if the target operating condition is to switch from the first bridge arm to the second bridge arm, a first switching transistor of the first bridge arm is turned off, a second switching transistor of the first bridge arm is controlled to be in an on state, and a real-time voltage of the third switching transistor of the second bridge arm is measured. If the target operating condition corresponding to the switch switching signal is to switch from the second bridge arm to the first bridge arm, the third switching transistor of the second bridge arm is turned off, the fourth switching transistor of the second bridge arm is controlled to be in an on state, and a real-time voltage of the first switching transistor of the first bridge arm is measured.

In step 906, the other bridge arm is turned on in response to an absolute value of the real-time voltage dropping below a preset voltage within a preset second time period.

The controller sets adaptive dead time based on the real-time voltage of the other bridge arm. The adaptive dead time represents a duration during which the absolute value of the real-time voltage of the other bridge arm drops below a preset value Us. For example, time for decreasing the real-time voltage of the other bridge arm to zero is determined as the dead time. Through the adaptive dead time, the accuracy and flexibility of timing control for turning on the other bridge arm are improved, preventing the other bridge arm from being turned on before the voltage of the other bridge arm decreases to Us, thus avoiding losses of the switching transistors. In addition, the adaptive dead time further avoids a scenario where the real-time voltage of the other bridge arm drops below Us within the dead time, that is, the preset dead time is excessive long which causes the other bridge arm to remain off even when the ZVS condition is met, reducing the efficiency of bridge arm switching, and avoiding that a fixed setting of the dead time limits the flexibility of turn-on timing control over switching transistors.

When the duration during which the absolute value of the real-time voltage drops below the preset value Us is less than or equal to the second time period, that is, the adaptive dead time is less than or equal to Ts1, it is determined that the soft switching condition is met. When the duration during which the absolute value of the real-time voltage drops below the preset value Us is greater than the second time period, that is, the adaptive dead time is greater than Ts1, it is determined that the soft switching condition is not met. In the embodiment, the adaptive dead time is controlled within a reasonable range through the second time period, preventing a situation where the secondary bridge arm circuit fails to achieve ZVS under special circumstances, which would otherwise cause the real-time voltage of the other bridge arm to fail to drop below Us, resulting in an excessive waiting time. The second time period may be configured based on actual situations.

In an embodiment, when the absolute value of the real-time voltage of the first bridge arm within the preset second time period is less than or equal to the preset voltage, that is, the adaptive dead time is less than or equal to Ts1, or when the absolute value of the real-time voltage of the second bridge arm within the preset second time period is less than or equal to the preset voltage, that is, the adaptive dead time is less than or equal to Ts1, the secondary bridge arm circuit is able to achieve the ZVS, and the switching transistors of the first bridge arm or the switching transistors of the second bridge arm are turned on to complete the switching of the secondary bridge arm circuit.

In step 907, the wave blocking operation is performed on the secondary side of the inverter in response to the absolute value of the real-time voltage being greater than the preset voltage throughout the preset second time period.

When the absolute value of the real-time voltage of the first bridge arm is greater than the preset voltage throughout the preset second time period, that is, the adaptive dead time is greater than Ts1, or when the absolute value of the real-time voltage of the second bridge arm is greater than the preset voltage throughout the preset second time period, that is, the adaptive dead time is greater than Ts1, the secondary bridge arm circuit fails to achieve the ZVS, and the wave blocking operation is directly performed to block the secondary side.

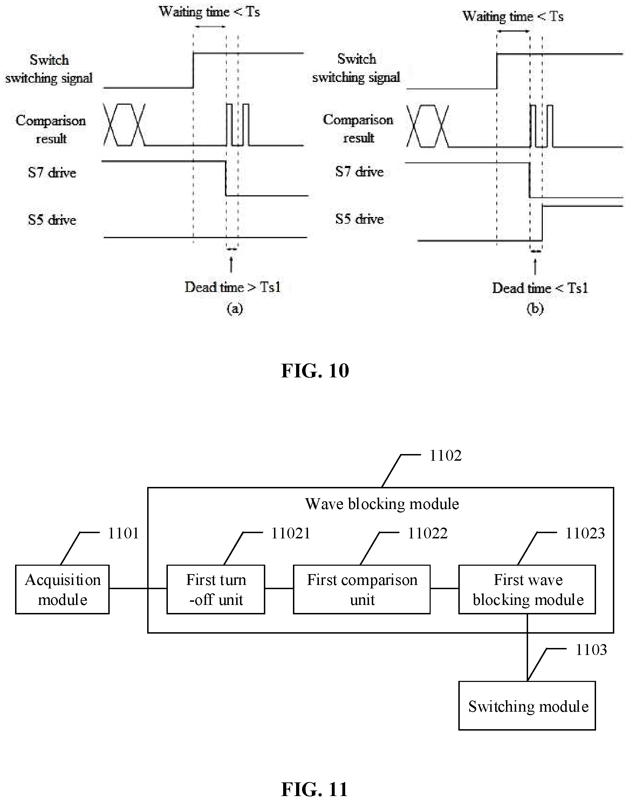

Referring to FIG. 10, the switch switching signal is to switch S7 from the on state to the off state and to switch S5 from the off state to the on state, that is, to switch the second bridge arm being on to the first bridge arm being on. The waiting time is less than or equal to the first time period Ts, that is, S7 is turned off and the real-time voltage of S5 is measured in response to receiving a high-level signal outputted from the comparator within Ts.

If the dead time is greater than the second time period Ts1, as shown in FIG. 10(a), that is, the time for the absolute value of the real-time voltage of S5 to drop below the preset value Us is greater than the second time period Ts1, S5 is not turned on at the end of the dead time, and the wave blocking operation is performed on the secondary side of the inverter at the end of the dead time.

If the dead time is less than or equal to the second time period Ts1, as shown in FIG. 10(b), that is, the time for the absolute value of the real-time voltage of S5 to drop below the preset value Us is less than or equal to the second time period Ts1, S5 is turned on at the end of the dead time.

In the embodiment, whether the secondary side is able to achieve the ZVS is monitored in real time. The secondary side waits in response to the present secondary current failing to meet the ZVS condition, and bridge arm switching is performed to turn off the first bridge arm or the second bridge arm in response to the secondary current meeting the ZVS condition within the first time period. Additionally, an adaptive dead time is configured, the other bridge arm is turned on in response to the real-time voltage of the other bridge arm drops below the preset voltage within the second time period, and the wave blocking operation is performed in response to the real-time voltage being greater than the preset voltage throughout the second time period. Thus, protection on the secondary side is achieved at a switching cycle level without increasing the control frequency.

The ZVS protection method for an inverter according to the present disclosure is described above. Referring to FIG. 11, a ZVS protection apparatus for an inverter according to an embodiment of the present disclosure is described below. In an embodiment, the ZVS protection apparatus for an inverter includes an acquisition module 1101, a wave blocking module 1102 and a switching module 1103.

The acquisition module 1101 is configured to acquire, in response to a switch switching signal for a secondary side of the inverter, a present secondary current of the inverter, where the secondary current flows from a transformer into a midpoint between a first bridge arm and a second bridge arm.

The wave blocking module 1102 is configured to perform a wave blocking operation on the secondary side of the inverter in response to the secondary current failing to meet a ZVS condition under a target operating condition corresponding to the switch switching signal.

The switching module 1103 is configured to perform bridge arm switching on the secondary bridge arm circuit in response to the secondary current meeting the ZVS condition under the target operating condition corresponding to the switch switching signal.

In the embodiment, whether the secondary side is able to achieve the ZVS is monitored in real time. Bridge arm switching is performed in response to the secondary current being able to achieve the ZVS, and a wave blocking operation is performed in response to the secondary current failing to achieve the ZVS. Therefore, protection on the secondary side is achieved at a switching cycle level without increasing the control frequency.

FIG. 11 shows a ZVS protection apparatus for an inverter according to another embodiment of the present disclosure. The ZVS protection apparatus includes an acquisition module 1101, a wave blocking module 1102 and a switching module 1103.

The acquisition module 1101 is configured to acquire, in response to a switch switching signal for a secondary side of the inverter, a present secondary current of the inverter, where the secondary current flows from a transformer into a midpoint between a first bridge arm and a second bridge arm.

The wave blocking module 1102 is configured to perform a wave blocking operation on the secondary side of the inverter in response to the secondary current failing to meet a ZVS condition under a target operating condition corresponding to the switch switching signal.

The switching module 1103 is configured to perform bridge arm switching on the secondary bridge arm circuit in response to the secondary current meeting the ZVS condition under the target operating condition corresponding to the switch switching signal.

In an embodiment, the wave blocking module 1102 includes a first turn-off unit 11021, a first comparison unit 11022 and a first wave blocking unit 11023.

The first turn-off unit 11021 is configured to turn off the first bridge arm or the second bridge arm of the secondary bridge arm circuit based on the target operating condition corresponding to the switch switching signal.

The first comparison unit 11022 is configured to compare the present secondary current with a preset current under the target operating condition to obtain a present comparison result, where the comparison result includes a first level signal and a second level signal, the first level signal indicates that the secondary current fails to meet the ZVS condition under the target operating condition corresponding to the switch switching signal, and the second level signal indicates that the secondary current meets the ZVS condition under the target operating condition corresponding to the switch switching signal.

The first wave blocking unit 11023 is configured to perform the wave blocking operation on the secondary side of the inverter in response to the current comparison result being the first level signal.

In an embodiment, the first comparison unit 11022 is further configured to: compare the secondary current with a first preset current in response to the target operating condition of switching from the second bridge arm to the first bridge arm, output the first level signal in response to the secondary current being less than the first preset current, and output the second level signal in response to the secondary current being greater than the first preset current. The first preset current is greater than zero.

The first comparison unit 11022 is further configured to: compare the secondary current with a second preset current in response to the target operating condition of switching from the first bridge arm to the second bridge arm, output the first level signal in response to the secondary current being greater than the second preset current, and output the second level signal in response to the secondary current being less than the second preset current. The second preset current is less than zero.

In an embodiment, the switching module 1103 is further configured to wait until an end of the dead time in response to the current comparison result being the second level signal, and turn on the other bridge arm at an end of dead time based on the target operating condition.

In an embodiment, the first turn-off unit 11021 is further configured to: in response to the target operating condition of switching from the first bridge arm to the second bridge arm corresponding to the switch switching signal, turn off the first switching transistor of the first bridge arm and control the second switching transistor of the first switching transistor to be in an on state; and in response to the target operating condition of switching from the second bridge arm to the first bridge arm corresponding to the switch switching signal, turn off the third switching transistor of the second bridge arm and control the fourth switching transistor of the second bridge arm to be in an on state.

In an embodiment, the first wave blocking unit 11023 is further configured to: wait until the end of the dead time in response to receiving the second level signal; in response to the target operating condition of switching from the first bridge arm to the second bridge arm, turn on the third switching transistor of the second bridge arm and control the fourth switching transistor of the second bridge arm to be in the on state at the end of the dead time; and in response to the target operating condition of switching from the second bridge arm to the first bridge arm, turn on the first switching transistor of the first bridge arm and control the second switching transistor of the first bridge arm to be in the on state at the end of the dead time.

In the embodiment, whether the secondary side is able to achieve the ZVS is monitored in real time. Bridge arm switching is performed in response to the secondary current being able to achieve the ZVS, and the wave blocking operation is performed in response to the secondary current failing to achieve the ZVS. Thus, protection on the secondary side is achieved at a switching cycle level without increasing the control frequency.

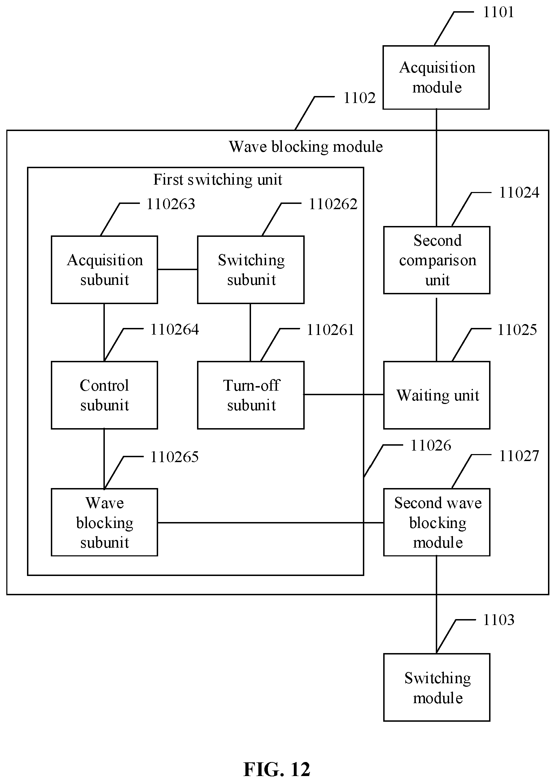

Referring to FIG. 12, in an embodiment, the wave blocking module 1102 further includes a second comparison unit 11024, a waiting unit 11025 and a first switching unit 11026.

The second comparison unit 11024 is configured to compare the present secondary current with the preset current under the target operating condition to obtain the current comparison result, where the comparison result includes the first level signal and the second level signal, the first level signal indicates that the secondary current fails to meet the ZVS condition under the target operating condition corresponding to the switch switching signal, and the second level signal indicates that the secondary current meets the ZVS condition under the target operating condition corresponding to the switch switching signal.

The waiting unit 11025 is configured to acquire a comparison result within a preset first time period in response to the current comparison result being the first level signal.

The first switching unit 11026 includes a turn-off subunit 110261, a switching subunit 110262 and a second wave blocking unit 11027.

The turn-off subunit 110261 is configured to turn off, in response to receiving the second level signal within the first time period, the first bridge arm or the second bridge arm of the secondary bridge arm circuit based on the target operating condition.

The switching subunit 110262 is configured to turn on the other bridge arm at the end of the dead time.

The second wave blocking unit 11027 is configured to perform the wave blocking operation on the secondary side of the inverter in response to a failure of receiving the second level signal within the first time period.

In an embodiment, the first switching unit 11026 further includes an acquisition subunit 110263, a control subunit 110264 and a wave blocking subunit 110265.

The acquisition subunit 110263 is configured to acquire a real-time voltage of the other bridge arm.

The control subunit 110264 is configured to turn on the other bridge arm in response to an absolute value of the real-time voltage dropping below a preset voltage within a preset second time period.

The wave blocking subunit 110265 is configured to perform the wave blocking operation on the secondary side of the inverter in response to the absolute value of the real-time voltage being greater than the preset voltage throughout the preset second time period.

In an embodiment, whether the secondary side is able to achieve the ZVS is monitored in real time. When the ZVS condition is not met, the secondary side waits. When the secondary current meets the ZVS condition within the first time period, bridge arm switching is performed to turn off the first bridge arm or the second bridge arm. In addition, an adaptive dead time is configured. The other bridge arm is turned on in response to the real-time voltage of the other bridge arm dropping below the preset voltage. Thus, protection on the secondary side is achieved at a switching cycle level without increasing the control frequency.

The ZVS protection apparatus for an inverter according to the embodiments of the present disclosure is described above from a perspective of modular functional entities as shown in FIG. 11 and FIG. 12, and a ZVS protection device for an inverter is described below from a perspective of hardware processing.

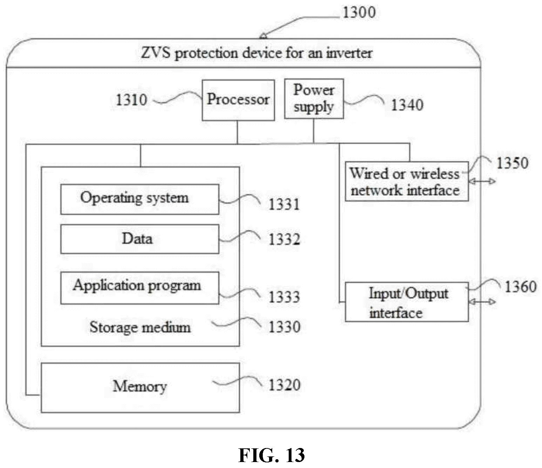

FIG. 13 is a schematic structural diagram of a ZVS protection device for an inverter according to an embodiment of the present disclosure. The ZVS protection device 1300 for an inverter may vary significantly due to different configurations or performances. The ZVS protection device for an inverter may include at least one central processing unit (CPU) 1310 (for example, one or more processors), a memory 1320, and at least one storage medium 1330 (for example, one or more mass storage devices) that stores an application program 1333 or data 1332. The memory 1320 and the storage medium 1330 may perform temporary storage or persistent storage. The program stored in the storage medium 1330 may include one or more of above-mentioned modules (which are not illustrated in FIG. 13). Each of the modules may include a series of instructions for the ZVS protection device 1300 for an inverter. Further, the central processing unit 1310 may be configured to communicate with the storage medium 1330, perform the series of computer-readable instructions in the storage medium 1330 on the ZVS protection device 1300 for an inverter. The computer-readable instructions, when executed by a processor, cause the processor to perform the ZVS protection method for an inverter according to the above-described embodiments.

The ZVS protection device 1300 for an inverter may further include one or more power supplies 1340, one or more wired or wireless network interfaces 1350, one or more input/output interfaces 1360, and/or, one or more operating systems 1331 such as Windows Server, Mac OS X, Unix, Linux, and FreeBSD. Those skilled in the art may understand that the structure of the ZVS protection device shown in FIG. 13 does not constitute a limitation to the ZVS protection device for an inverter, and the ZVS protection device 1300 for an inverter may include more components or fewer components than those shown in FIG. 13, some components may be combined, or the components may be deployed in different manners.

A computer-readable storage medium is provided according to an embodiment of the present disclosure. The computer-readable storage medium may be a non-volatile computer-readable storage medium or a volatile computer-readable storage medium. The computer-readable storage medium stores instructions. The instructions, when executed on a computer, cause the computer to perform the ZVS protection method for an inverter. The ZVS protection method for an inverter includes:
acquiring a present secondary current of the inverter in response to a switch switching signal for a secondary side of the inverter, where the secondary current flows from the transformer into a midpoint between a first bridge arm and a second bridge arm of a secondary bridge arm circuit; performing a wave blocking operation on the secondary side of the inverter in response to the secondary current failing to meet a ZVS condition under a target operating condition corresponding to the switch switching signal; and performing bridge arm switching on the secondary bridge arm circuit based on the target operating condition in response to the secondary current meeting the ZVS condition under the target operating condition corresponding to the switch switching signal. In the embodiment, whether the secondary side is able to achieve the ZVS is monitored in real time. The bridge arm switching is performed in response to the secondary current being able to achieve the ZVS. A wave blocking logic is implemented on the primary side and the secondary side in response to the secondary current failing to achieve the ZVS. Thus, protection on the secondary side is achieved at a switching cycle level without increasing the control frequency.

The performing wave blocking operation on the secondary side of the inverter in response to the secondary current failing to meet the ZVS condition under the target operating condition corresponding to the switch switching signal includes: turning off the first bridge arm or the second bridge arm based on the target operating condition corresponding to the switch switching signal; comparing the present secondary current with a preset current under the target operating condition to obtain a current comparison result, where the comparison result includes a first level signal and a second level signal, the first level signal indicates that the secondary current fails to meet the ZVS condition under the target operating condition, and the second level signal indicates that the secondary current meets the ZVS condition under the target operating condition; and performing the wave blocking operation on the secondary side of the inverter in response to the current comparison result being the first level signal. In the embodiment, without increasing the control frequency, the wave blocking operation is performed in response to receiving the first level signal from the comparator, and bridge arm switching is performed in response to receiving the second level signal, preventing the secondary side from being switched when ZVS of the secondary side fails to be achieved, thereby avoiding excessive stress on switching transistors, and reducing losses of switching transistors on the secondary side.

The comparing the present secondary current with the preset current under the target operating condition to obtain the current comparison result includes: comparing the secondary current with a first preset current in response to the target operating condition of switching from the second bridge arm to the first bridge arm, outputting the first level signal in response to the secondary current being less than the first preset current, and outputting the second level signal in response to the secondary current being greater than the first preset current, where the first preset current is greater than zero; and comparing the secondary current with a second preset current in response to the target operating condition of switching from the first bridge arm to the second bridge arm, outputting the first level signal in response to the secondary current being greater than the second preset current, and outputting the second level signal in response to the secondary current being less than the second preset current, where the second preset current is less than zero. In the embodiment, the comparison is performed based on different operating conditions, preventing the secondary side from being switched when ZVS of the secondary side fails to be achieved, thereby avoiding excessive stress on switching transistors, and reducing losses of switching transistors on the secondary side.

The performing bridge arm switching on the secondary bridge arm circuit based on the target operating condition in response to the secondary current meeting the ZVS condition under the target operating condition corresponding to the switch switching signal includes: waiting until an end of the dead time in response to the current comparison result being the second level signal, and turning on the other bridge arm at the end of the dead time based on the target operating condition. The dead time provides a buffer for charging and discharging of junction capacitors of upper and lower switching transistors, thus avoiding losses caused by hard switching.

The first bridge arm includes a first switching transistor and a second switching transistor, and the second bridge arm includes a third switching transistor and a fourth switching transistor. The turning off the first bridge arm or the second bridge arm of the secondary bridge arm circuit includes: in response to the target operating condition of switching from the first bridge arm to the second bridge arm corresponding to the switch switching signal, turning off the first switching transistor of the first bridge arm and controlling the second switching transistor to be in an on state; and in response to the target operating condition of switching from the second bridge arm to the first bridge arm corresponding to the switch switching signal, turning off the third switching transistor of the second bridge arm and controlling the fourth switching transistor to be in an on state.

The first bridge arm includes the first switching transistor and the second switching transistor, and the second bridge arm includes the third switching transistor and the fourth switching transistor. The turning on the other bridge arm at the end of the dead time based on the target operating condition includes: waiting until the end of the dead time in response to receiving the first level signal, in response to the target operating condition of switching from the first bridge arm to the second bridge arm, turning on the third switching transistor of the second bridge arm and controlling the fourth switching transistor to be in the on state at the end of the dead time; and in response to the target operating condition of switching from the second bridge arm to the first bridge arm, turning on the first switching transistor of the first bridge arm and controlling the second switching transistor to be in the on state at the end of the dead time. In the embodiment, precise control over turn-on and turn-off of switching transistors based on the target operating condition ensures soft switching.

The performing the wave blocking operation on the secondary side of the inverter in response to the secondary current failing to meet the ZVS condition under the target operating condition corresponding to the switch switching signal includes: comparing the present secondary current with a preset current under the target operating condition to obtain a current comparison result, where the comparison result includes a first level signal and a second level signal, the first level signal indicates that the secondary current fails to meet the ZVS condition under the target operating condition, the second level signal indicates that the secondary current meets the ZVS condition under the target operating condition, and the preset current is a minimum current for charging and discharging of junction capacitors of upper and lower switching transistors within a dead time; acquiring a comparison result within a preset first time period in response to the current comparison result being the first level signal; turning off, in response to receiving the second level signal within the first time period, the first bridge arm or the second bridge arm of the secondary bridge arm circuit based on the target operating condition, and turning on the other bridge arm at the end of the dead time; and performing the wave blocking operation on the secondary side of the inverter in response to a failure of receiving the second level signal within the first time period. In the embodiment, whether the secondary side is able to achieve the ZVS is monitored in real time. The secondary side waits in response to the secondary current failing to meet the ZVS condition, the bridge arm switching is performed in response to receiving the second level signal within the preset first time period, and the wave blocking operation is performed on the inverter in response to a failure of receiving the second level signal within the first time period. Thus, frequent wave blocking operations are avoided, thereby improving the operating efficiency of the inverter and achieving protection on the secondary side at a switching cycle level without increasing the control frequency.

After turning off the first bridge arm or the second bridge arm of the secondary bridge arm circuit, the ZVS protection method for an inverter further includes: acquiring a real-time voltage of the other bridge arm; turning on the other bridge arm in response to an absolute value of the real-time voltage dropping below a preset voltage within a preset second time period; and performing the wave blocking operation on the secondary side of the inverter in response to the absolute value of the real-time voltage being greater than the preset voltage throughout the preset second time period. In the embodiment, whether the secondary side is able to achieve the ZVS is monitored in real time. The secondary side waits in response to the secondary current failing to meet the ZVS condition, bridge arm switching is performed in response to the secondary current meeting the ZVS condition within the first time period, to turn off the first bridge arm or the second bridge arm. In addition, an adaptive dead time is configured. The other bridge arm is turned on in response to the real-time voltage of the other bridge arm dropping below the preset voltage within the second time period, and the wave blocking operation is performed in response to the real-time voltage of the other bridge arm being greater than the preset voltage throughout the second time period. Thus, protection on the secondary side is achieved at a switching cycle level without increasing the control frequency.

Those skilled in the art can clearly understand that, for the sake of convenience and brevity of description, for a detailed operating process of the system, the apparatus and the unit described above, reference may be made to a corresponding process in the aforementioned method embodiments, which is not repeated herein.

When an integrated unit is implemented as a software function unit and is sold or used as an independent product, the integrated unit may be stored in a computer-readable storage medium. Based on such understanding, part of the technical solutions of the present disclosure which are essential or contribute to the related art, or all or part of the technical solutions may be embodied in a form of a software product. The computer software product is stored in a storage medium and includes several instructions for causing a computer device (such as a personal computer, a server, or a network device) to perform all or part of the method described in the embodiments of the present disclosure. The storage medium includes various media that can store program codes, such as a U disk, a mobile hard disk, a read-only memory (ROM), a random access memory (RAM), a magnetic disk, or an optical disk.

The above-described embodiments are used for describing, instead of limiting the technical solutions of the present disclosure. Although the present disclosure is described in detail with reference to the above-mentioned embodiments, those skilled in the art should understand that, modifications can be made to the technical solutions described in the above-mentioned embodiments, or equivalent replacements can be made to some technical features in the technical solutions, and such modifications or replacements do not cause the essence of corresponding technical solutions to depart from the spirit and scope of the technical solutions of the embodiments of the present disclosure.

## Claims

1. A ZVS protection method for an inverter, applied to the inverter, wherein the inverter comprises a transformer and a secondary bridge arm circuit, the secondary bridge arm circuit comprises a first bridge arm and a second bridge arm connected in series, a secondary winding of the transformer is connected to a midpoint between the first bridge arm and the second bridge arm,
**characterized in that** the ZVS protection method for an inverter comprises:
acquiring a present secondary current of the inverter in response to a switch switching signal for a secondary side of the inverter, wherein the secondary current flows from the transformer into the midpoint between the first bridge arm and the second bridge arm;
performing a wave blocking operation on the secondary side of the inverter in response to the secondary current failing to meet a ZVS condition under a target operating condition corresponding to the switch switching signal; and
performing bridge arm switching on the secondary bridge arm circuit based on the target operating condition in response to the secondary current meeting the ZVS condition under the target operating condition corresponding to the switch switching signal.

2. The ZVS protection method for an inverter according to claim 1, wherein the performing the wave blocking operation on the secondary side of the inverter in response to the secondary current failing to meet the ZVS condition under the target operating condition corresponding to the switch switching signal comprises:
turning off the first bridge arm or the second bridge arm based on the target operating condition corresponding to the switch switching signal;
comparing the present secondary current with a preset current under the target operating condition to obtain a current comparison result, wherein the comparison result comprises a first level signal and a second level signal, the first level signal indicates that the secondary current fails to meet the ZVS condition under the target operating condition, the second level signal indicates that the secondary current meets the ZVS condition under the target operating condition, and the preset current is a minimum current for charging and discharging of junction capacitors of upper switching transistors and lower switching transistors within a dead time;
and
performing the wave blocking operation on the secondary side of the inverter in response to the current comparison result being the first level signal.

3. The ZVS protection method for an inverter according to claim 2, wherein the comparing the present secondary current with the preset current under the target operating condition to obtain the current comparison result comprises:
comparing the secondary current with a first preset current in response to the target operating condition of switching from the second bridge arm to the first bridge arm, outputting the first level signal in response to the secondary current being less than the first preset current, and outputting the second level signal in response to the secondary current being greater than the first preset current, wherein the first preset current is greater than zero; and
comparing the secondary current with a second preset current in response to the target operating condition of switching from the first bridge arm to the second bridge arm, outputting the first level signal in response to the secondary current being greater than the second preset current, and outputting the second level signal in response to the secondary current being less than the second preset current, wherein the second preset current is less than zero.

4. The ZVS protection method for an inverter according to claim 2, wherein the first bridge arm comprises a first switching transistor and a second switching transistor, and the second bridge arm comprises a third switching transistor and a fourth switching transistor,
wherein the turning off the first bridge arm or the second bridge arm based on the target operating condition corresponding to the switch switching signal comprises:
in response to the target operating condition of switching from the first bridge arm to the second bridge arm corresponding to the switch switching signal,
turning off the first switching transistor of the first bridge arm; and
controlling the second switching transistor to be in an on state; and
in response to the target operating condition of switching from the second bridge arm to the first bridge arm corresponding to the switch switching signal,
turning off the third switching transistor of the second bridge arm; and
controlling the fourth switching transistor to be in an on state.

5. The ZVS protection method for an inverter according to claim 2, wherein the performing bridge arm switching on the secondary bridge arm circuit based on the target operating condition in response to the secondary current meeting the ZVS condition under the target operating condition corresponding to the switch switching signal comprises:
waiting until an end of the dead time in response to the current comparison result being the second level signal; and
turning on the other bridge arm at the end of the dead time based on the target operating condition.

6. The ZVS protection method for an inverter according to claim 5, wherein the first bridge arm comprises a first switching transistor and a second switching transistor, and the second bridge arm comprises a third switching transistor and a fourth switching transistor,
wherein the turning on the other bridge arm at the end of dead time based on the target operating condition comprises:
in response to the target operating condition of switching from the second bridge arm to the first bridge arm,
turning on the first switching transistor of the first bridge arm and controlling the second switching transistor to be in an on state at the end of the dead time; and
in response to the target operating condition of switching from the first bridge arm to the second bridge arm
turning on the third switching transistor of the second bridge arm and controlling the fourth switching transistor to be in an on state at the end of the dead time.

7. The ZVS protection method for an inverter according to claim 1, wherein the performing the wave blocking operation on the secondary side of the inverter in response to the secondary current failing to meet the ZVS condition under the target operating condition corresponding to the switch switching signal comprises:
comparing the present secondary current with a preset current under the target operating condition to obtain a current comparison result, wherein the comparison result comprises a first level signal and a second level signal, the first level signal indicates that the secondary current fails to meet the ZVS condition under the target operating condition, the second level signal indicates that the secondary current meets the ZVS condition under the target operating condition, and the preset current is a minimum current for charging and discharging of junction capacitors of upper and lower switching transistors within a dead time;
acquiring a comparison result within a preset first time period in response to the current comparison result being the first level signal;
turning off, in response to receiving the second level signal within the preset first time period, the first bridge arm or the second bridge arm of the secondary bridge arm circuit based on the target operating condition, and turning on the other bridge arm at an end of the dead time; and
performing the wave blocking operation on the secondary side of the inverter in response to a failure of receiving the second level signal within the preset first time period.

8. The ZVS protection method for an inverter according to claim 7, wherein the turning off the first bridge arm or the second bridge arm of the secondary bridge arm circuit in response to receiving the second level signal within the preset first time period comprises:
acquiring a real-time voltage of the other bridge arm;
turning on the other bridge arm in response to an absolute value of the real-time voltage dropping below a preset voltage within a preset second time period; and
performing the wave blocking operation on the secondary side of the inverter in response to the absolute value of the real-time voltage being greater than the preset voltage throughout the preset second time period.

9. A ZVS protection apparatus for an inverter, applied to the inverter, wherein the inverter comprises a transformer and a secondary bridge arm circuit, the secondary bridge arm circuit comprises a first bridge arm and a second bridge arm connected in series, a secondary winding of the transformer is connected to a midpoint between the first bridge arm and the second bridge arm,
wherein the ZVS protection apparatus for the inverter comprises:
an acquisition module , configured to acquire a present secondary current of the inverter in response to a switch switching signal for a secondary side of the inverter, wherein the secondary current flows from the transformer into the midpoint between the first bridge arm and the second bridge arm;
a wave blocking module, configured to perform a wave blocking operation on the secondary side of the inverter in response to the secondary current failing to meet a ZVS condition under a target operating condition corresponding to the switch switching signal; and
a switching module, configured to perform bridge arm switching on the secondary bridge arm circuit in response to the secondary current meeting the ZVS condition under the target operating condition corresponding to the switch switching signal.

10. A ZVS protection device for an inverter, comprising:
a memory storing instructions; and
at least one processor, wherein the at least one processor, when invoking the instructions stored in the memory, causes the ZVS protection device for an inverter to perform the ZVS protection method for an inverter according to any one of claims 1 to 8.

11. A computer-readable storage medium, storing instructions, wherein the instructions, when being read and executed, perform the ZVS protection method for an inverter according to any one of claims 1 to 8.
